# EUROPEAN PATENT SPECIFICATION

(11) **EP 2 874 200 B1**
(45) Date of publication and mention of the grant of the patent: **16.08.2017**
(21) Application number: 13817401.6
(22) Date of filing: 26.06.2013
(51) Int. Cl.: H01M 2/08, H01M 2/02, H01M 2/04

(54) **FLAT BATTERY**
FLACHE BATTERIE
BATTERIE PLATE

(30) Priority: 13.07.2012 JP 2012158012; 13.08.2012 JP 2012179536
(43) Date of publication of application: 20.05.2015
(73) Proprietor: Hitachi Maxell, Ltd., Ibaraki-shi Osaka 567-8567 (JP)
(72) Inventor: KOMATSU, Shinya, Ibaraki-shi Osaka 567-8567 (JP); YAMAGUCHI, Koji, Ibaraki-shi Osaka 567-8567 (JP)
(74) Representative: Zimmermann, Tankred Klaus
(86) International application number: PCT/JP2013/067454
(87) International publication number: WO 2014/010413

(56) References cited:
- WO-A1-2011/111255
- WO-A1-2012/124187
- GB-A- 1 399 231
- JP-A- H 113 689
- JP-A- S6 394 554
- JP-A- S61 288 369
- JP-A- 2001 523 885
- JP-A- 2006 024 446
- JP-A- 2008 147 638
- JP-U- S5 675 470
- US-A1- 2002 182 492
- US-A1- 2011 223 471
- US-B1- 6 468 691

## Description

### TECHNICAL FIELD

The present invention relates to flat batteries, such as coin batteries.

### BACKGROUND ART

A known flat battery includes a bottomed cylindrical exterior can and a seal can covering the opening of the exterior can. In such a flat battery, as disclosed in JP Hei4(1992)-34837 A and JP Sho61(1986)-233965 A, for example, a gasket made of resin is disposed in areas where the exterior can and seal can are connected with each other to keep the airtightness of the interior of the battery and ensure electrical insulation between the exterior can and seal can. That is, the gasket is located on the peripheral wall of the seal can so as to be sandwiched between the peripheral wall and exterior can.

Each of JP Hei4(1992)-34837 A and JP Sho61(1986)-233965 A further discloses that the gasket is molded onto the peripheral wall of the seal can. JP S63 94554 A discloses an enclosed cell with an insulting packing made of resin formed thicker, at the portion where an injecting gate is provided at the time molding, than at other portions.
JP 2008 147638 A discloses an electrochemical cell provided with an annular gasket which has a slit housing the entire circumference of the leading end portion of a wall section of a metal case.
GB 1399231 A discloses a closure for electrochemical cells.
US 2011/0223471 A1 discloses a gasket for an electrochemical cell.
JP S5675470 U discloses a battery.
US 2002/0182492 A1 discloses a flat-shaped nonaqueous electrolyte battery. US 6 468 691 B1 discloses an electrochemical cell with improved gasket end seal.

### DISCLOSURE OF THE INVENTION

If a gasket is to be molded on the peripheral wall of the seal can, as in the above arrangements, injection molding is employed to inject molten resin material into a mold. More specifically, the opening edge portion of the peripheral wall of the seal can is positioned within a mold, and molten resin material is injected into the mold. Here, the molten resin material is injected into the mold at a certain pressure that allows the molten resin material to spread throughout the interior of the mold.

Generally, the peripheral wall of the seal can of a flat battery has a relatively small thickness. As such, when the resin material injected at a certain pressure during injection molding hits the peripheral wall of the seal can, the peripheral wall may be deformed.

Further, when the molten resin material hits the peripheral wall of the seal can during injection molding, the peripheral wall of the seal can may prevent resin material from advancing deep into the mold. In such cases, it is difficult to cause resin material to spread into every corner in the mold.

An object of the present invention is to provide a flat battery with a gasket molded on the peripheral wall of its seal can where the peripheral wall of the seal can may be prevented from being deformed during injection molding of the gasket, while allowing resin material to be efficiently injected into the mold.

A flat battery according to an embodiment of the present invention includes: a bottomed cylindrical exterior can having a cylindrical side wall extending in a cylinder axial direction; a bottomed cylindrical seal can having a peripheral wall extending in the cylinder axial direction and covering an opening of the exterior can such that the peripheral wall is located inside the exterior can; and a gasket formed by injection molding on the peripheral wall of the seal can and sandwiched between the exterior can and the seal can. The gasket includes: a covering portion molded on the peripheral wall so as to cover at least a portion of the peripheral wall of the seal can; and a protruding portion formed integrally with the covering portion and displaced from the peripheral wall in the cylinder axial direction. The protruding portion has an injection portion formed to correspond to an injection port of a mold used for injection molding of the gasket (first arrangement).

Thus, when the gasket is molded on the peripheral wall of the seal can, the peripheral wall of the seal can may be prevented from being deformed by resin material injected into the mold. That is, the injection portion corresponding to the injection port of the mold is located on the protruding portion of the gasket, which is displaced from the peripheral wall of the seal can in the cylinder axial direction. As such, during injection molding, resin material is injected into an area where the peripheral wall of the seal can is not present. Thus, when resin material is injected into the mold, the resin material is prevented from directly hitting the peripheral wall of the seal can. This will prevent the peripheral wall of the seal can from being deformed by resin material injected into the mold during injection molding. Moreover, since resin material injected into the mold does not directly hit the peripheral wall of the seal can during injection molding, the flow of the resin material is not prevented by the peripheral wall. Accordingly, resin material may be efficiently injected into the mold.

Starting from the first arrangement, portions of the covering portion and protruding portion that are located adjacent the exterior can may be sandwiched between the cylindrical side wall of the exterior can and the peripheral wall of the seal can. The injection portion may be located on a portion of the protruding portion that faces the cylindrical side wall of the exterior can (second arrangement).

Thus, resin material injected into the mold may be prevented from hitting the peripheral wall of the seal can in a more reliable manner. That is, if molten resin material is injected into the mold through an area that is to be in a portion of the protruding portion of the gasket that is located adjacent the exterior can, the resin material is injected into an area in the mold where the peripheral wall of the seal can is not present. Accordingly, the peripheral wall of the seal can may be prevented from being deformed by resin material injected into the mold during injection molding in a more reliable manner, while the resin material may be injected into the mold more efficiently.

Starting from the second arrangement, the injection portion may have a recess formed on a surface of the protruding portion (third arrangement). Thus, when the gasket is sandwiched between the seal can and exterior can, the recess formed at the injection portion defines a gap between the exterior can and gasket. As such, even when electrolyte or the like in the flat battery seeps between the gasket and exterior can, the gap formed by the recess may store the electrolyte or the like. Accordingly, the above arrangement will prevent a leakage of liquid or the like from the flat battery.

Starting from any one of the first to third arrangements, the protruding portion may have a length measured in the cylinder axial direction that is larger than a size of the protruding portion measured in a thickness direction (fourth arrangement).

As the size of the protruding portion measured in the cylinder axial direction is relatively large, the injection portion for resin material can be easily provided on a portion of the protruding portion that faces the cylindrical side wall of the exterior can.

Furthermore, a protruding portion having the above-described configuration can easily be deformed in the cylinder axial direction. As such, the edge portion of the protruding portion is deformed inwardly with respect to the gasket, forming a gap between the protruding portion and exterior can. This gap, too, can store electrolyte or the like that has seeped between the gasket and exterior can. Accordingly, a leakage of liquid from the flat battery may be prevented in a more reliable manner.

Starting from the fourth arrangement, the peripheral wall of the seal can may extend in the cylinder axial direction with its edge portion not being folded back (fifth arrangement).

The fourth arrangement may be employed in an arrangement where the edge portion of the peripheral wall of the seal can extends in the cylinder axial direction without being folded back and a gasket is injection-molded on the peripheral wall to reduce the length of the peripheral wall measured in the cylinder axial direction, while improving the sealing performance of the gasket.

More specifically, the protruding portion of the gasket which protrudes from the peripheral wall of the seal can has a protrusion length measured in the cylinder axial direction that is larger than the thickness of the protruding portion, and thus can be deformed significantly. Thus, the gasket can be deformed in an increased range compared with an arrangement where the protrusion length measured in the cylinder axial direction is not more than the thickness of the protruding portion, while the reaction force generated in the gasket may be increased to increase the contact pressure between the gasket and exterior can. This will improve the sealing performance of the gasket. Moreover, as the length of the protruding portion measured in the cylinder axial direction is larger, the length of the peripheral wall of the seal can is smaller, making it easier to form the peripheral wall of the seal can.

Starting from the fourth or fifth arrangement, the protruding portion may have a protrusion length measured in the cylinder axial direction that is larger than a thickness of the protruding portion measured at its edge (sixth arrangement).

In the above arrangement, the edge of the protruding portion of the gasket may be pressed strongly against the exterior can to deform the edge portion more significantly. This will further improve the sealing performance of the gasket.

Starting from any one of the fourth to sixth arrangements, the protruding portion may have a protrusion length measured in the cylinder axial direction that is 1/4 or more of a length of the gasket measured in the cylinder axial direction (seventh arrangement).

Thus, the protrusion length of the protruding portion of the gasket measured in the cylinder axial direction is greater than its protrusion length in a conventional arrangement (i.e. 1/9 or smaller of the length of the gasket measured in the cylinder axial direction). This will reduce the length of the peripheral wall of the seal can in the cylinder axial direction in a more reliable manner, while improving the sealing performance of the gasket in a more reliable manner.

Starting from any one of the fourth to seventh arrangements, the gasket may be tapered in shape such that a thickness of a portion of the covering portion that covers an outer side of the peripheral wall of the seal can gradually decreases toward an edge of the peripheral wall (eighth arrangement).

One of the above fourth to seventh arrangements may be employed in such a tapered gasket to minimize the thickness of the gasket. More specifically, if a gasket is formed in a tapered shape, the gasket must have a certain thickness or larger measured at a portion adjacent the edge of the peripheral wall of the seal can located in the gasket. Consequently, the gasket must have an increased thickness measured at a portion of the gasket adjacent the base edge of the peripheral wall such that the gasket has a certain thickness or larger measured at a portion adjacent the edge of the peripheral wall.

As one of the above fourth to seventh arrangements is employed to reduce the length of the peripheral wall of the seal can measured in the cylinder axial direction, the gasket has a smaller thickness measured at a portion adjacent the base edge of the peripheral wall. Accordingly, the thickness of the entire gasket is reduced.

Starting from any one of the fourth to eighth arrangements, the exterior can and the seal can may be bottomed and cylindrical in shape. The cylindrical side wall of the exterior can may have an outer diameter that is smaller than four times a height of the exterior can and seal can as joined together measured in the cylinder axial direction (ninth arrangement).

If the outer diameter of the exterior can is smaller than four times the height of the exterior can and seal can as joined together measured in the cylinder axial direction, the entire battery has a greater height than a typical coin battery. Even in such a battery, employing one of the above fourth to seventh arrangements will reduce the length of the peripheral wall of the seal can, while improving the sealing performance of the gasket. Further, if a battery having the above configuration is tapered as in the eighth arrangement, the entire gasket will have a smaller thickness.

Starting from the ninth arrangement, the cylindrical side wall of the exterior can may have an outer diameter that is not more than twice the height of the exterior can and seal can as joined together measured in the cylinder axial direction (tenth arrangement).

Thus, even if the exterior can has an outer diameter that is not more than twice the height of the exterior can and seal can as joined together measured in the cylinder axial direction, employing one of the above fourth to seventh arrangements will reduce the length of the peripheral wall of the seal can, while improving the sealing performance of the gasket.

A method of manufacturing a flat battery according to an embodiment of the present invention includes: a seal can forming step for forming a bottomed cylindrical seal can; and a gasket molding step for injection-molding a gasket on a peripheral wall of the seal can using a mold, the gasket having a covering portion covering the peripheral wall of the seal can and a protruding portion protruding from the covering portion. In the gasket molding step, the gasket is molded by injecting resin into an area of the mold that is used to form the protruding portion during injection molding (eleventh arrangement).

If this method is used, the peripheral wall of the seal can will be prevented from being bent by resin material injected during injection molding, or the flow of the resin material within the mold will not be prevented by the peripheral wall. This will prevent the peripheral wall of the seal can from being deformed during injection molding, while allowing resin material to be efficiently injected into the mold.

In a flat battery according to an embodiment of the present invention, during injection molding of a gasket, resin material is injected into an area that will be in portions of the gasket, sandwiched between the exterior can and seal can, that form a protruding portion protruding from a covering portion covering the peripheral wall of the seal can. This will prevent the peripheral wall of the seal can from being deformed during injection molding, while allowing resin material to be efficiently injected into the mold.

### BRIEF DESCRIPTION OF THE DRAWINGS

[FIG. 1] FIG. 1 is a schematic cross-sectional view of a flat battery according to an embodiment of the present invention.
[FIG. 2] FIG. 2 is a partial enlarged cross-sectional view of the electrode assembly in the flat battery.
[FIG. 3] FIG. 3 is a partial enlarged cross-sectional view of the injection portion of the gasket.
[FIG. 4] FIG. 4 is a cross-sectional view illustrating the sizes of various parts of the battery.
[FIG. 5] FIG. 5 illustrates how a gasket may be molded onto a negative electrode can.
[FIG. 6] FIG. 6 is an enlarged cross-sectional view of the gasket.

### EMBODIMENTS FOR CARRYING OUT THE INVENTION

Now, embodiments of the present invention will be described in detail with reference to the drawings. The same or corresponding parts in the drawings are labeled with the same numerals and their description will not be repeated.

### (Overall Construction)

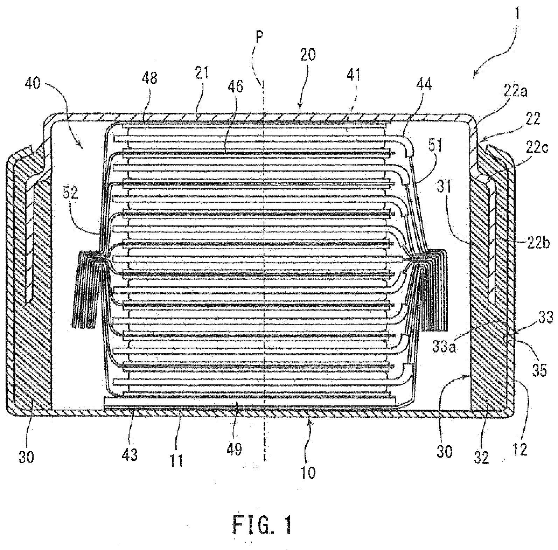

FIG. 1 is a schematic cross-sectional view of a flat battery 1 of an embodiment of the present invention. This flat battery 1 includes a positive electrode can 10 that implements a bottomed cylindrical exterior can, a negative electrode can 20 that implements a seal can covering the opening of the positive electrode can 10, a gasket 30 sandwiched between the positive electrode can 10 and negative electrode can 20, and an electrode assembly 40 contained in the space defined between the positive electrode can 10 and negative electrode can 20. Thus, as the positive electrode can 10 and negative electrode can 20 are joined together, the flat battery 1 is, as a whole, in the shape of a flat coin. In addition to the electrode assembly 40, nonaqueous electrolyte (not shown) is enclosed in the space defined between the positive electrode can 10 and negative electrode can 20 of the flat battery 1. The positive electrode can 10 and negative electrode can 20, as joined together, form a battery case.

The positive electrode can 10 is made of a metal material such as stainless steel, and formed by press-molding to be in the shape of a bottomed cylinder. The positive electrode can 10 includes a circular bottom 11 and a cylindrical peripheral wall 12 (cylindrical side wall) formed along its periphery and continuously with the bottom 11. The peripheral wall 12 extends from, and substantially perpendicularly to, the outer peripheral edge of the bottom 11 in a longitudinal cross-sectional view (i.e. as shown in FIG. 1). As discussed further below, the opening edge portion of the peripheral wall 12 of the positive electrode can 10 is folded inwardly with respect to the positive electrode can 10 with the positive and negative electrode cans 10 and 20 sandwiching the gasket 30, and is caulked to the negative electrode can 20. The letter P in FIG. 1 indicates the cylinder axis of the positive electrode can 10. The peripheral wall 12 extends in a cylinder axial direction of the positive electrode can 10.

Similar to the positive electrode can 10, the negative electrode can 20 is made of a metal material such as stainless steel, and formed by press-molding to be in the shape of a bottomed cylinder. The negative electrode can 20 includes a generally cylindrical peripheral wall 22 with an external size smaller than that of the peripheral wall 12 of the positive electrode can 10, and a circular flat portion 21 that blocks one of its openings. Similar to the peripheral wall of the positive electrode can 10, the peripheral wall 22 extends substantially perpendicularly to the flat portion 21 in a longitudinal cross-sectional view. The peripheral wall 22 extends in the cylinder axial direction P with its edge portion not being folded back. That is, the negative electrode can 20 is a so-called straight can, without a fold in the peripheral wall 22.

The peripheral wall 22 includes an outspread portion 22b, defined by a step, with a larger diameter than the base edge portion 22a, which is located close to the flat portion 21. In other words, the peripheral wall 22 has a stepped portion 22c formed between the base edge portion 22a and the outspread portion 22b. As shown in FIG. 1, the opening edge portion of the peripheral wall 12 of the positive electrode can 10 is folded and caulked to this stepped portion 22c. That is, the opening edge portion of the peripheral wall 12 of the positive electrode can 10 is fitted over the stepped portion 22c of the negative electrode can 20. Similar to the peripheral wall 12 of the positive electrode can 10, the peripheral wall 22 of the negative electrode can 20 extends in a cylinder axial direction.

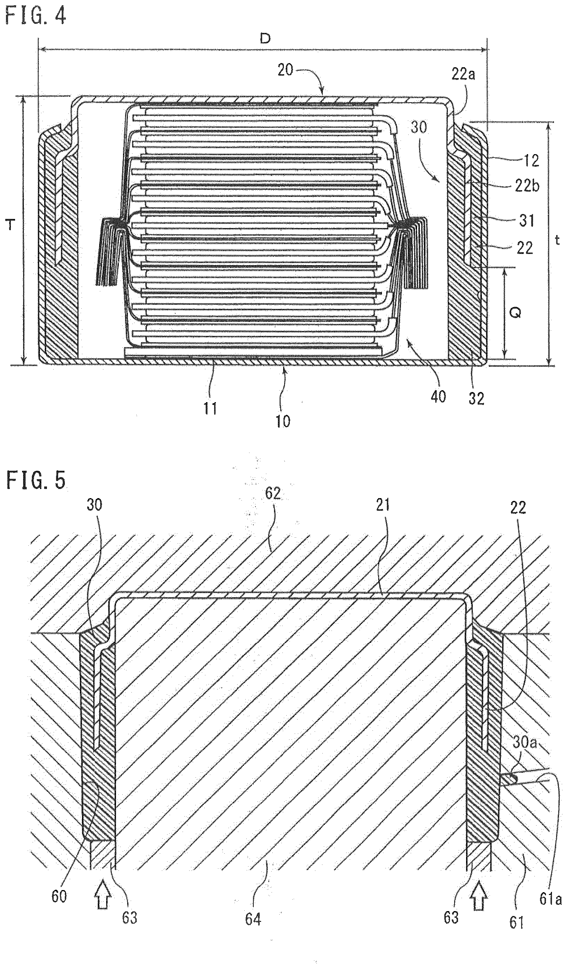

The outer diameter D of the peripheral wall 12 of the positive electrode can 10 divided by the thickness T of the flat battery 1 is preferably smaller than 4. Particularly, it is preferable that D/T is not more than 2. Thus, the flat battery 1 of the present embodiment has a larger height than a typical coin battery (where D/T is not less than 4). The outer diameter D and the thickness T are the sizes of elements shown in FIG. 4.

The distance t between the bottom 11 of the positive electrode can 10 and the battery shoulder in the peripheral wall 12 (i.e. the position of the opening edge of the peripheral wall 12 when the peripheral wall 12 is caulked to the peripheral wall 22 of the negative electrode can 20) divided by the thickness T of the flat battery 1 is preferably in the range of 0.8 to 0.9. Thus, even in the case of a battery with a larger height than a typical coin battery, discussed above, the peripheral wall 12 of the positive electrode can 10 is caulked to a position on the negative electrode can 20 that is close to its flat portion 21. Thus, when the positive electrode can 10 is caulked to the negative electrode can 20, the deformation of the peripheral wall 22 of the negative electrode can 20 can be minimized.

The gasket 30 is made of polypropylene (PP). The gasket 30 is molded onto the peripheral wall 22 of the negative electrode can 20 so as to be sandwiched between the peripheral wall 12 of the positive electrode can 10 and the peripheral wall 22 of the negative electrode can 20. The configuration of the gasket 30 will be detailed further below. Instead of PP, the gasket 30 may be made of a resin composition with polyphenylene sulfide (PPS) containing olefin-based elastomer, polytetrafluoroethylene (PFA) or a polyamide-based resin, for example.

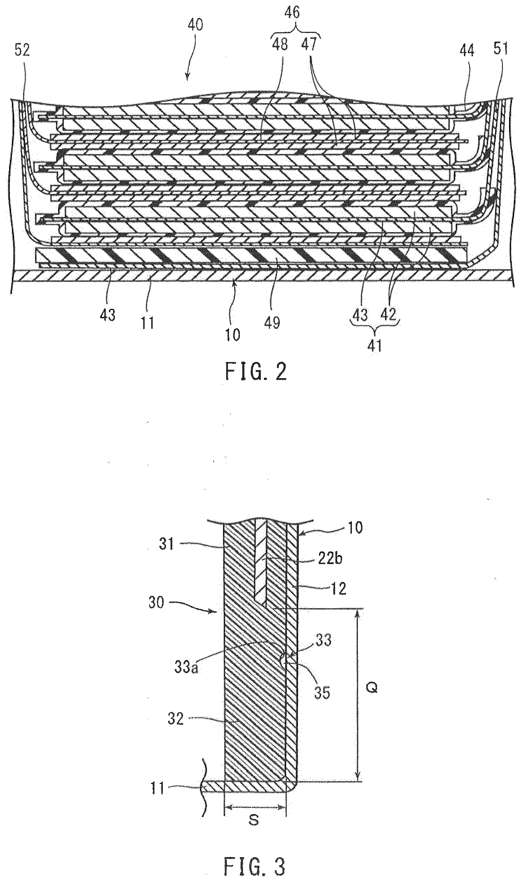

As additionally shown in FIG. 2, the electrode assembly 40 includes generally disc-shaped positive electrodes 41, each contained in a bag-shaped separator 44, and generally disc-shaped negative electrodes 46, the positive and negative electrodes being laminated in an alternating manner in a thickness direction. Thus, the electrode assembly 40 is, as a whole, generally in the shape of a circular column. Further, the positive electrodes 41 and negative electrodes 46 are laminated such that both end surfaces of the electrode assembly 40 are formed by negative electrodes.

As shown in FIG. 2, in each positive electrode 41, a positive electrode active material layer 42 containing a positive electrode active material, such as lithium cobaltate, is provided on each of the sides of a positive electrode current collector 43 made of a metal foil, such as of aluminum.

As shown in FIG. 2, in each negative electrode 46, a negative electrode active material layer 47 containing a negative electrode active material, such as graphite, is provided on each of the sides of a negative electrode current collector 48 made of a metal foil, such as of copper. Each of the negative electrodes located at the ends of the generally columnar electrode assembly 40 disposed in an axial direction thereof has a negative electrode active material layer 47 on only one of the sides of the negative electrode current collector 48 such that the negative electrode current collectors 48 are located at the ends of the electrode assembly 40 disposed in an axial direction thereof. That is, the negative electrode current collectors 48 at both ends of the generally columnar electrode assembly 40 are uncovered. One of these negative electrodes 48 on the electrode assembly 40 is located over the bottom 11 of the electrode can 10, with a positive electrode current collector 43 and an insulating sheet 49 interposed therebetween (see FIGS. 1 and 2). The other one of the negative electrode current collectors 48 on the electrode assembly 40 is in contact with the flat portion 21 of the negative electrode can 20 when the electrode assembly 40 is disposed between the positive electrode can 10 and negative electrode can 20 (see FIG. 1).

Each separator 44 is a bag-shaped element that is generally circular in shape in a plan view, and has a sufficient size for containing a generally disc-shaped positive electrode 41. The separator 44 is formed of microporous thin film made of polyethylene with good insulation properties. As the separator 44 is formed of microporous thin film, lithium ions can penetrate the separator 44. Each separator 44 is formed by wrapping one rectangular sheet of microporous thin film around a positive electrode 41 and using heat welding, for example, to cause portions of the sheet that overlie each other to adhere to each other.

As shown in FIGS. 1 and 2, a conductive positive electrode lead 51 is formed integrally with the positive electrode current collector 43 of each positive electrode 41 to extend outwardly from the positive electrode current collector 43 in a plan view. Portions of each positive electrode lead 51 that are located close to the associated positive electrode current collector 43 are covered with the associated separator 44. A positive electrode current collector 43 without a positive electrode active material layer 42 is disposed between the insulating sheet 49 and the bottom 11 of the positive electrode can 10. That is, this positive electrode current collector 43 is in electrical contact with the bottom 11 of the positive electrode can 10.

A conductive negative electrode lead 52 is formed integrally with the negative electrode current collector 48 of each negative electrode 46 to extend outwardly from the negative electrode current collector 48 in a plan view.

As shown in FIGS. 1 and 2, the positive electrodes 41 and negative electrodes 46 are laminated such that the positive electrode leads 51 of the positive electrodes 41 are located on one side section of the assembly and the negative electrode leads 52 of the negative electrodes 46 are located on the opposite side section of the assembly.

When the positive electrodes 41 and negative electrodes 46 are laminated in a thickness direction thereof as described above, the end portions of the positive electrode leads 51 are overlaid on each other in a thickness direction thereof and then connected with each other using ultrasonic welding, for example. Thus, the positive electrodes 41 are electrically connected with each other and electrically connected with the positive electrode can 10 via the positive electrode leads 51. The end portions of the negative electrode leads 52 are overlaid upon each other in a thickness direction thereof and then connected with each other using ultrasonic welding, for example. Thus, the negative electrodes 46 are electrically connected with each other and are electrically connected with the negative electrode can 20 via the negative electrode leads 52.

### (Configuration of Gasket)

Next, the configuration of the gasket 30 will be described in detail with reference to FIGS. 1, 3, 4 and 6.

As shown in FIGS. 1 and 4, the gasket 30 is generally cylindrical in shape so as to enclose the peripheral wall 22 of the negative electrode can 20. More specifically, the gasket 30 is molded on the negative electrode can 20 so as to cover the inner side, with respect to the negative electrode can, of the peripheral wall 22 and the outer sides, with respect to the negative electrode can, of the stepped portion 22c and outspread portion 22b of the peripheral wall 22. Further, the gasket 30 protrudes from the opening portion of the peripheral wall 22 in a cylinder axial direction of the negative electrode can 20. That is, the gasket 30 includes a covering portion 31 that covers the peripheral wall 22 of the negative electrode can 20 and a protruding portion 32 displaced from the peripheral wall 22 of the negative electrode can 20 in a cylinder axial direction of the negative electrode can 20.

As shown in FIGS. 1 and 4, the gasket 30 has such an inner diameter that it is substantially flush with the inner surface of the base edge portion 22a of the peripheral wall 22 of the negative electrode can 20. That is, the covering portion 31 and protruding portion 32 of the gasket 30 have a substantially equal inner diameter.

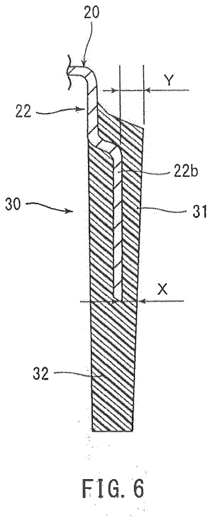

As shown in FIG. 6, the gasket 30 is tapered in shape such that its outer diameter gradually decreases as it goes from the covering portion 31 located adjacent the base edge portion of the peripheral wall 22 of the negative electrode can 20 toward the edge of the protruding portion 32. That is, the covering portion 31 of the gasket 30 is tapered in shape such that its thickness gradually decreases as it goes from the portion adjacent the base edge of the peripheral wall 22 of the negative electrode can 20 toward the portion adjacent the edge of the wall. In the case of such a tapered gasket 30, the portion of the gasket 30 adjacent the edge of the peripheral wall 22 of the negative electrode can 20 must have a certain thickness (X in FIG. 6) or larger. Consequently, the portion of the gasket 30 adjacent the base edge of the peripheral wall 22 must have a thickness of Y which is larger than X. In this configuration, as discussed further below, the thickness Y may be minimized by reducing the length of the peripheral wall 22 and increasing the protrusion length of the protruding portion 32 of the gasket 30. Thus, the thickness of the gasket 30 may be reduced, thereby maximizing the battery capacity in the flat battery.

The gasket 30 has a sufficient length to allow it to contact the bottom 11 of the positive electrode can 10 when the peripheral wall 12 of the positive electrode can 10 is caulked to the outer periphery of the negative electrode can 20. Thus, when the positive electrode can 10 is caulked to the negative electrode can 20, the edge of the protruding portion 32 of the gasket 30 is pressed against the bottom 11 of the positive electrode can 10. Thus, the edge portion of the protruding portion 32 of the gasket 30 seals the space defined by the positive electrode can 10 and negative electrode can 20.

Further, as the opening edge portion of the peripheral wall 12 of the positive electrode can 10 is caulked to the outer periphery of the negative electrode can 20 as discussed above, the gasket 30 is compressed by the opening edge portion of the peripheral wall 12 of the positive electrode can 10. Thus, the gasket 30 seals the gap between the peripheral wall 12 of the positive electrode can 10 and the outer periphery of the negative electrode can 20.

The pressing force of the edge of the protruding portion 32 of the gasket 30 against the bottom 11 of the positive electrode can 10 is produced by the force that the gasket 30 receives when the peripheral wall 12 of the positive electrode can 10 is caulked to the outer periphery of the negative electrode can 20.

The length Q of the protruding portion 32 of the gasket 30 measured in a cylinder axial direction of the negative electrode can 20 is substantially equal to the length of the covering portion 31 that covers the peripheral wall 22 of the negative electrode can 20 measured in the cylinder axial direction.

As shown in FIG. 3, the length Q of the protruding portion 32 of the gasket 30 measured in the cylinder axial direction is larger than its size measured in a thickness direction, which coincides with a radial direction of the negative electrode can 20 (i.e. the thickness of the protruding portion 32). Particularly, it is preferable that the length Q of the protruding portion 32 of the gasket 30 measured in the cylinder axial direction is larger than its size of the edge portion of the protruding portion 32 measured in the thickness direction, denoted by S.

As the protruding portion 32 of the gasket 30, which does not cover the peripheral wall 22 of the negative electrode can 20, is shaped such that its size measured in a cylinder axial direction of the negative electrode can 20 is larger than its size measured in a radial direction of the can, the protruding portion 32 may be deformed easily. Thus, as the gasket 30 provided on the peripheral wall 22 of the negative electrode can 20 is pressed by the opening edge of the peripheral wall 12 of the positive electrode can 10, as described above, the gap between the protruding portion 32 of the gasket 30 and the bottom 11 of the exterior can 10 may be sealed in a more reliably manner.

Further, the length of the entire gasket 30 measured in the cylinder axial direction is larger than conventional ones, allowing the gasket 30 to seal larger areas of the positive electrode can 10 and negative electrode can 20. This will prevent a leakage of liquid or the like through a gap between the positive electrode can 10 and negative electrode can 20 in a more reliable manner.

Preferably, the length Q of the protruding portion 32 of the gasket 30 measured in the cylinder axial direction is 1/4 or more of the length of the gasket 30 measured in the cylinder axial direction. Thus, the length of the protruding portion 32 measured in the cylinder axial direction is larger than the length of the protruding portion of the gasket of a flat battery of a typical configuration (1/9 or less of the length of the gasket measured in the cylinder axial direction). This will reduce the length of the peripheral wall 22 of the negative electrode can 20 measured in the cylinder axial direction in a more reliable manner and, at the same time, improve the sealing performance of the gasket 30 in a more reliable manner.

The gasket 30 is formed by so-called injection molding, where molten resin material is injected into a mold and molded, as discussed below. On the protruding portion 32 of the gasket 30 is located an injection portion 33 to correspond to the injection port through which molten resin material is injected into the mold. That is, the injection portion 33 is formed by the injection port through which resin material is injected into the mold during injection molding of a gasket 30.

The injection portion 33 includes a recess 33a formed when a projection 30a formed in the injection port (see FIG. 5) is removed. That is, as discussed below, the injection port of the mold allows a protrusion of resin, i.e. projection 30a, to be formed on the protruding portion 32 of the gasket 30. The projection 30a is removed by part of the mold when the gasket 30 is removed from the mold. Accodingly, some portions of the gasket at the root of the projection 30a are scooped out to form the recess 33a discussed above.

Thus, injecting resin material into an area that will be in the protruding portion 32 of the gasket 30 will prevent the peripheral wall 22 of the negative electrode can 20 from being deformed by the resin material injected into the mold. Further, in the case of the above configuration, resin material will not be prevented by the peripheral wall 22 of the negative electrode can 20 from being injected deep into the mold.

Further, since the injection portion 33 has a recess 33a on a surface of the protruding portion 32 located adjacent the positive electrode can 10, a gap 35 is defined between the peripheral wall 12 of the positive electrode can 10 and gasket 30 when the positive electrode can 10 is caulked to the negative electrode can 20, as shown in FIGS. 1 and 3. Any electrolyte or the like that has seeped between the protruding portion 32 of the gasket 30 and the bottom 11 of the positive electrode can 10 is accumulated in the gap 35. Thus, the gap 35 will prevent a leakage of liquid such as electrolyte from the flat battery 1.

As discussed above, the protruding portion 32 of the gasket 30 has a length measured in a cylinder axial direction of the negative electrode can 20 that is larger than its size measured in a thickness direction. Thus, an injection port for injecting resin material may be easily provided in a portion of the mold for the gasket 30 that is used to form the side of the protruding portion 32 that is adjacent the peripheral wall 12.

### (Method of Manufacturing Flat Battery)

Next, how a flat battery 1 with the above-described configuration may be manufactured will be described.

First, bottomed cylindrical positive and negative electrode cans 10 and 20 are formed by press-forming.

Apart from this, a plurality of plate-shaped positive electrodes 41, each covered with a separator 44, and a plurality of plate-shaped negative electrodes 46 are laminated in a thickness direction to construct a generally columnar electrode assembly 40, as shown in FIG. 1. Since the electrode assembly 40 is fabricated in a method similar to conventional methods, details of how it is fabricated will not be given.

How a gasket 30 may be molded onto the negative electrode can 20 will be described with reference to FIG. 5.

As shown in FIG. 5, a fixed mold portion 61, a movable mold portion 62 and a piston movable mold portion 63 having a ring-shaped cross-section are disposed outward of the negative electrode can 20, and a pin 64 is positioned inward of the negative electrode can 20. As such, the mold portions 61, 62 and 63 and pin 64 define a space 60 along the peripheral wall 22 of the negative electrode can 20 for forming a gasket 30. Thus, the fixed mold portion 61, movable mold portion 62, piston movable mold portion 63 and pin 64 constitute a mold for molding a gasket 30.

The fixed mold portion 61 has an injection port 61a through which resin material may be injected into the space 60 from the outside. As molten resin material is injected into the space 60 through this injection port 61a, the space 60 is filled with resin material. Since the injection port 61a of the fixed mold portion 61 is displaced from the peripheral wall 22 of the negative electrode can 20, the resin material injected through the injection port 61a is prevented from hitting the peripheral wall 22 and deforming the peripheral wall 22. Further, the flow of resin material is not prevented by the peripheral wall 22.

After the resin material in the space 60 sets to form a gasket 30, the movable mold portion 62 is first removed. Then, the piston movable mold portion 63 is moved in an axial direction of the pin 64 (the direction of the hollow arrow in FIG. 5) to remove the negative electrode can 20 with the gasket 30 molded thereon from the pin 64 and fixed mold portion 61.

When the gasket 30 has been molded from resin material in the space 60, as shown in FIG. 5, the gasket has a projection 30a that protrudes into the injection port 61a of the fixed mold portion 61. When the gasket 30 is moved relative to the fixed mold portion 61 in the direction of the hollow arrow in FIG. 5, as discussed above, the projection 30a is cut off by the fixed mold portion 61. Since the gasket 30 is made of a resin material such as PP, not just the projection 30a is cleanly cut off, but it is scooped out. This results in a recess 33a on the surface of the gasket 30, as shown in FIGS. 1 and 3.

The portions of the fixed mold portion 61 that are used to mold the outer surface of the cylindrical gasket 30 are tapered in shape such that their inner diameter gradually increases as it goes toward the portion adjacent the stepped portion 22c of the peripheral wall 22 of the negative electrode can 20. As such, when the piston movable mold portion 63 pushes the gasket 30, as discussed above, the negative electrode can 20 may be easily removed from the fixed mold portion 61.

Thus, as shown in FIG. 6, the gasket 30 is shaped in such a manner that its outer diameter gradually decreases as it goes from the covering portion 31, adjacent the base edge of the peripheral wall 22 of the negative electrode can 20, toward the edge of the protruding portion 32.

The electrode assembly 40, together with the insulating sheet 49 and other components, are placed in the positive electrode can 10 and nonaqueous electrolyte is injected into the can. Then, the negative electrode can 20 with the gasket 30 molded thereon as described above is placed onto the positive electrode can 10 so as to cover its opening. Then, the opening edge portions of the peripheral wall 12 of the positive electrode can 10 are folded inwardly with respect to the positive electrode can 10 to be caulked to the stepped portion 22c of the peripheral wall 22 of the negative electrode can 20. This results in a flat battery 1 with the configuration described above. The nonaqueous electrolyte may be produced by, for example, dissolving LiPF₆ in a solvent with ethylene carbonate and methyl ethyl carbonate mixed together.

The step of forming the negative electrode can 20 by press-forming corresponds to the seal can forming step, while the step of molding the gasket 30 on the peripheral wall 22 of the negative electrode can 20 corresponds to the gasket molding step.

### (Effects of Embodiment)

In this embodiment, the gasket 30 formed on the peripheral wall 22 of the negative electrode can 20 has a covering portion 31 that covers the peripheral wall 22 and a protruding portion 32 that protrudes from the covering portion 31 in a cylinder axial direction of the negative electrode can 20. This protruding portion 32 has an injection portion 33 that corresponds to an injection port through which resin material is injected into the mold when the gasket 30 is formed by injection molding.

Thus, when the gasket 30 is injection-molded, the peripheral wall 22 of the negative electrode can 20 will be prevented from being deformed by the resin material injected into the mold, or the flow of the resin material within the mold will not be prevented by the peripheral wall 22. This will prevent the peripheral wall 22 of the seal can 20 from being deformed during injection molding of the gasket 30, while allowing resin material to be efficiently injected into the mold during injection molding.

Further, the injection portion 33 defined on the gasket 30 includes a recess 33a produced when the projection 30a formed in the injection port of the mold is cut off by the fixed mold portion 61. This forms a gap 35 between the injection portion 33 of the gasket 30 and the peripheral wall 12 of the positive electrode can 10. Since this gap 35 is provided, electrolyte or the like in the flat battery 1, even when seeping between the gasket 30 and the peripheral wall 12 of the positive electrode can 10, will be kept in the gap 35. Thus, the recess 33a of the injection portion 33 will prevent a leakage of liquid from the flat battery 1.

Furthermore, the protruding portion 32 of the gasket 30 has a protrusion length Q measured in a cylinder axial direction of the negative electrode can 20 that is larger than its size measured in a thickness direction, S. Thus, when the peripheral wall 12 of the positive electrode can 10 is caulked to the peripheral wall 22 of the negative electrode can 20, the gasket 30 is compressed in the cylinder axial direction such that the edge portion of the protruding portion 32 is deformed so as to fall inwardly with respect to the gasket 30. This creates a partial gap between the gasket 30 and positive electrode can 10. This gap will also prevent a leakage of liquid from the flat battery 1.

Moreover, as the protrusion length Q measured in a cylinder axial direction of the negative electrode can 20 is larger than the size S measured in a thickness direction of the protruding portion 32, as described above, the length of the peripheral wall 22 of the negative electrode can 20 is smaller than in a conventional arrangement. Thus, the peripheral wall 22 can be formed more easily. Furthermore, since the protruding portion 32 of the gasket 30 can be deformed more easily, the gasket 30 may be deformed easily by pressing the gasket 30 against the bottom 11 of the exterior can 10. Thus, the gasket 30 can be deformed in an increased range compared with an arrangement where the protrusion length Q of the protruding portion 32 of the gasket 30 is not more than its size in a thickness direction, S, and deforming the gasket 30 will produce an increased reaction force in the gasket to increase the contact pressure between the gasket 30 and positive electrode can 10. This will improve the sealing performance of the gasket 30.

Further, the gasket 30 is shaped in such a manner that its outer diameter gradually decreases as it goes from the covering portion 31 located adjacent the base edge of the peripheral wall 22 of the negative electrode can 20 toward the edge of the protruding portion 32. With the gasket 30 shaped in this manner, reducing the length of the peripheral wall 22 of the negative electrode can 20 and increasing the protrusion length of the protruding portion 32 of the gasket 30 will minimize the thickness of the gasket 30.

### (Other Embodiments)

While an embodiment of the present invention has been described, the above embodiment is merely an illustrative example for carrying out the present invention. Therefore, the present invention is not limited to the above embodiment, but the above embodiment may be modified as appropriate without departing from the spirit of the invention.

In the above embodiment, the length of the protrusion portion 32 of the gasket 30 measured in a cylinder axial direction of the negative electrode can 20 is substantially equal to the length of the covering portion 31 of the gasket 30 measured in the cylinder axial direction. Further, in the above embodiment, the protruding portion 32 has a length measured in the cylinder axial direction that is larger than its size measured in the thickness direction. Alternatively, the protruding portion 32 may have any dimensions that can be achieved by injecting resin into a mold during injection molding, i.e. any dimensions that allow the recess 33a of the injection portion 33 to be formed.

In the above embodiment, the gasket 30 is tapered in shape such that its outer diameter decreases as it goes toward the edge of the protruding portion 32. Alternatively, the gasket 30 may be cylindrical in shape. Alternatively, the gasket may be tapered in shape in a reversed manner.

In the above embodiment, the outer diameter D of the peripheral wall 12 of the positive electrode can 10 divided by the thickness T of the flat battery 1 is smaller than 4. Alternatively, the outer diameter D of the peripheral wall 12 of the positive electrode can 10 divided by the thickness T of the flat battery 1 may be not less than 4.

In the above embodiment, the distance t between the bottom 11 of the positive electrode can 10 and the battery shoulder in the peripheral wall 12 divided by the thickness T of the flat battery is in the range of 0.8 to 0.9. Alternatively, t/T may be smaller than 0.8 or greater than 0.9.

In the above embodiment, the electrode assembly 40 is made up of a plurality of positive electrodes 41 and negative electrodes 46 laminated upon each other; alternatively, the electrode assembly may have other configurations.

In the above embodiment, the positive electrode can 10 implements the exterior can and the negative electrode can 20 implements the seal can; conversely, the positive electrode can may implement the seal can and the negative electrode can may implement the exterior can.

In the above embodiment, each of the positive electrode can 10 and negative electrode can 20 is in the shape of a bottomed cylinder and the flat battery 1 is in the shape of a coin; alternatively, the flat battery may have shapes other than a cylinder, such as a polygonal column.

### INDUSTRIAL APPLICABILITY

The flat battery of the present invention is applicable as a flat battery with a gasket molded on its seal can.

## Claims

1. A flat battery (1), comprising:
a bottomed cylindrical exterior can (10) having a cylindrical side wall (12) extending in a cylinder axial direction;
a bottomed cylindrical seal can (20) having a peripheral wall (22) extending in the cylinder axial direction and covering an opening of the exterior can (10) such that the peripheral wall (22) is located inside the exterior can (10); and
a gasket (30) formed by covering the peripheral wall (22) of the seal can (20) and sandwiched between the exterior can (10) and the seal can (20),
wherein the gasket (30) includes:
a covering portion (31) molded on the peripheral wall (22) so as to cover at least a portion of the peripheral wall (22) of the seal can (20), the covering portion (31) also covering an inner side of the seal can (20); and
a protruding portion (32) formed integrally with the covering portion (31) and displaced from the peripheral wall (22) in the cylinder axial direction,
wherein:
a portion of the covering portion (31) that is located adjacent the exterior can (10) is sandwiched between the cylindrical side wall (12) of the exterior can (10) and the peripheral wall (22) of the seal can (20),
an injection portion (33) is located on a portion of the protruding portion (32) that faces the cylindrical side wall (12) of the exterior can (10), and
the injection portion (33) has a recess (33a) formed on a surface of the protruding portion (32).

2. The flat battery according to claim 1, wherein the protruding portion (32) has a length measured in the cylinder axial direction that is larger than a size of the protruding portion (32) measured in a thickness direction.

3. The flat battery according to claim 2, wherein the peripheral wall (22) of the seal can (20) extends in the cylinder axial direction with its edge portion not being folded back.

4. The flat battery according to claim 2 or 3, wherein the protruding portion (32) has a protrusion length measured in the cylinder axial direction that is larger than a thickness of the protruding portion (32) measured at its edge.

5. The flat battery according to any one of claims 2 to 4, wherein the protruding portion (32) has a protrusion length measured in the cylinder axial direction that is 1/4 or more of a length of the gasket (30) measured in the cylinder axial direction.

6. The flat battery according to any one of claims 2 to 5, wherein the gasket (30) is tapered in shape such that a thickness of a portion of the covering portion (31) that covers an outer side of the peripheral wall (22) of the seal can (20) gradually decreases toward an edge of the peripheral wall (22).

7. The flat battery according to any one of claims 2 to 6, wherein:
the exterior can (10) and the seal can (20) are bottomed and cylindrical in shape, and
the cylindrical side wall (12) of the exterior can (10) has an outer diameter (D) that is smaller than four times a height of the exterior can (10) and seal can (20) as joined together measured in the cylinder axial direction.

8. The flat battery according to claim 7, wherein the cylindrical side wall (12) of the exterior can (10) has an outer diameter that is not more than twice the height of the exterior can (10) and seal can (20) as joined together measured in the cylinder axial direction.

9. A method of manufacturing a flat battery, comprising:
a seal can (20) forming step for forming a bottomed cylindrical seal can (20); and
a gasket (30) molding step for injection-molding a gasket (30) on a peripheral wall (22) of the seal can (20) using a mold, the gasket (30) having a covering portion (31) covering the peripheral wall (22) of the seal can (20) and a protruding portion (32) protruding from the covering portion (31),
wherein, in the gasket (30) molding step, the gasket (30) is molded by injecting resin into an area of the mold (61-63) that is used to form the protruding portion (32) during injection molding, the covering portion (31) also covering an inner side and an outer side of the seal can (20),
so that the flat battery is such that:
a portion of the covering portion (31) that is located adjacent the exterior can (10) is sandwiched between the cylindrical side wall (12) of the exterior can (10) and the peripheral wall (22) of the seal can (20),
an injection portion (33) is located on a portion of the protruding portion (32) that faces the cylindrical side wall (12) of the exterior can (10), and
the injection portion (33) has a recess (33a) formed on a surface of the protruding portion (32).

10. The method of claim 9, **characterized by** inserting resin material through an injection port (61a) of the mold (61-63) which is displaced from the peripheral wall (22) of the seal can (20).

11. The method of claim 10, **characterized by** forming the recess (33a) by removing a projection (30a) on the protruding portion (32) formed in the injection port (61a).

12. The method of any of claims 9-11, **characterized by** placing the seal can (20) onto a bottomed cylindrical exterior can (10) so as to cover its opening.

## Patentansprüche

1. Eine Flachbatterie (1), die folgende Merkmale aufweist:
ein mit einem Boden versehenes zylindrisches Außengehäuse (10), das eine zylindrische Seitenwand (12) aufweist, die sich in einer Zylinderachsrichtung erstreckt;
ein mit einem Boden versehenes zylindrisches Abdichtungsgehäuse (20), das eine Umfangswand (22) aufweist, die sich in der Zylinderachsrichtung erstreckt, und das eine Öffnung des Außengehäuses (10) bedeckt, so dass die Umfangswand (22) sich innerhalb des Außengehäuses (10) befindet; und
eine Dichtung (30), die durch Bedecken der Umfangswand (22) des Abdichtungsgehäuses (20) gebildet ist und zwischen dem Außengehäuse (10) und dem Abdichtungsgehäuse (20) angeordnet ist,
wobei die Dichtung (30) Folgendes umfasst:
einen Abdeckabschnitt (31), der an der Umfangswand (22) geformt ist, um zumindest einen Abschnitt der Umfangswand (22) des Abdichtungsgehäuses (20) zu bedecken, wobei der Abdeckabschnitt (31) auch eine Innenseite des Abdichtungsgehäuses (20) bedeckt; und
einen Vorsprungsabschnitt (32), der mit dem Abdeckabschnitt (31) einstückig gebildet ist und von der Umfangswand (22) in der Zylinderachsrichtung versetzt ist,
wobei
ein Abschnitt des Abdeckabschnitts (31), der sich benachbart zu dem Außengehäuse (10) befindet, zwischen der zylindrischen Seitenwand (12) des Außengehäuses (10) und der Umfangswand (22) des Abdichtungsgehäuses (20) angeordnet ist,
ein Einspritzabschnitt (33) sich an einem Abschnitt des Vorsprungsabschnitts (32) befindet, der der zylindrischen Seitenwand (12) des Außengehäuses (10) zugewandt ist, und
der Einspritzabschnitt (33) eine Ausnehmung (33a) aufweist, die an einer Oberfläche des Vorsprungsabschnitts (32) gebildet ist.

2. Die Flachbatterie gemäß Anspruch 1, bei der der Vorsprungsabschnitt (32) eine in der Zylinderachsrichtung gemessene Länge aufweist, die größer als eine in einer Dickenrichtung gemessene Größe des Vorsprungsabschnitts (32) ist.

3. Die Flachbatterie gemäß Anspruch 2, bei der die Umfangswand (22) des Abdichtungsgehäuses (20) sich in der Zylinderachsrichtung erstreckt, wobei der Kantenabschnitt derselben nicht zurückgeklappt ist.

4. Die Flachbatterie gemäß Anspruch 2 oder 3, bei der der Vorsprungsabschnitt (32) eine in der Zylinderachsrichtung gemessene Vorsprungslänge aufweist, die größer als eine Dicke des Vorsprungsabschnitts (32) ist, gemessen an der Kante desselben.

5. Die Flachbatterie gemäß einem der Ansprüche 2 bis 4, bei der der Vorsprungsabschnitt (32) eine in der Zylinderachsrichtung gemessene Vorsprungslänge aufweist, die 1/4 oder mehr einer in der Zylinderachsrichtung gemessenen Länge der Dichtung (30) beträgt.

6. Die Flachbatterie gemäß einem der Ansprüche 2 bis 5, bei der die Dichtung (30) eine spitz zulaufende Gestalt aufweist, so dass eine Dicke eines Abschnitts des Abdeckabschnitts (31), der eine Außenseite der Umfangswand (22) des Abdichtungsgehäuses (20) bedeckt, zu einer Kante der Umfangswand (22) hin graduell abnimmt.

7. Die Flachbatterie gemäß einem der Ansprüche 2 bis 6, bei der:
das Außengehäuse (10) und das Abdichtungsgehäuse (20) mit einem Boden versehen sind und eine zylindrische Gestalt aufweisen und
die zylindrische Seitenwand (12) des Außengehäuses (10) einen Außendurchmesser (D) aufweist, der kleiner als das Vierfache einer Höhe des Außengehäuses (10) und des Abdichtungsgehäuses (20) zusammengenommen ist, gemessen in der Zylinderachsrichtung.

8. Die Flachbatterie gemäß Anspruch 7, bei der die zylindrische Seitenwand (12) des Außengehäuses (10) einen Außendurchmesser aufweist, der nicht mehr als das Doppelte der Höhe des Außengehäuses (10) und des Abdichtungsgehäuses (20) zusammengenommen beträgt, gemessen in der Zylinderachsrichtung.

9. Ein Verfahren zum Herstellen einer Flachbatterie, das folgende Schritte aufweist:
Bilden eines Abdichtungsgehäuses (20) zum Bilden eines mit einem Boden versehenen zylindrischen Abdichtungsgehäuses (20); und
Formen einer Dichtung (30) zum Spritzgießen einer Dichtung (30) an einer Umfangswand (22) des Abdichtungsgehäuses (20) unter Verwendung einer Form, wobei die Dichtung (30) einen Abdeckabschnitt (31) aufweist, der die Umfangswand (22) des Abdichtungsgehäuses (20) bedeckt, und einen Vorsprungsabschnitt (32), der von dem Abdeckabschnitt (31) vorsteht,
wobei bei dem Schritt des Formens der Dichtung (30) die Dichtung (30) durch Einspritzen von Harz in einen Bereich der Form (61-63) geformt wird, der verwendet wird, um während des Spritzgießens den Vorsprungsabschnitt (32) zu bilden, wobei der Abdeckabschnitt (31) auch eine Innenseite und eine Außenseite des Abdichtungsgehäuses (20) bedeckt,
so dass die Flachbatterie derart gestaltet ist, dass
ein Abschnitt des Abdeckabschnitts (31), der sich benachbart zu dem Außengehäuse (10) befindet, zwischen der zylindrischen Seitenwand (12) des Außengehäuses (10) und der Umfangswand (22) des Abdichtungsgehäuses (20) angeordnet ist,
ein Einspritzabschnitt (33) sich an einem Abschnitt des Vorsprungsabschnitts (32) befindet, der der zylindrischen Seitenwand (12) des Außengehäuses (10) zugewandt ist, und
der Einspritzabschnitt (33) eine Ausnehmung (33a) aufweist, die an einer Oberfläche des Vorsprungsabschnitts (32) gebildet ist.

10. Das Verfahren gemäß Anspruch 9, **gekennzeichnet durch** ein Einbringen eines Harzmaterials durch ein Einspritztor (61a) der Form (61-63), das von der Umfangswand (22) des Abdichtungsgehäuses (20) versetzt ist.

11. Das Verfahren gemäß Anspruch 10, **gekennzeichnet durch** ein Formen der Ausnehmung (33a) durch Entfernen eines Vorsprungs (30a) an dem Vorsprungsabschnitt (32), der in dem Einspritztor (61 a) gebildet ist.

12. Das Verfahren gemäß einem der Ansprüche 9-11, **gekennzeichnet durch** Platzieren des Abdichtungsgehäuses (20) auf ein mit einem Boden versehenes zylindrisches Außengehäuse (10), um die Öffnung desselben zu bedecken.

## Revendications

1. Batterie plate (1), comprenant:
une boîte extérieure cylindrique à fond (10) présentant une paroi latérale cylindrique (12) s'étendant dans une direction axiale de cylindre;
une boîte d'étanchéité cylindrique à fond (20) présentant une paroi périphérique (22) s'étendant dans la direction axiale de cylindre et recouvrant une ouverture de la boîte extérieure (10) de sorte que la paroi périphérique (22) soit située à l'intérieur de la boîte extérieure (10); et
un joint d'étanchéité (30) formé en recouvrant la paroi périphérique (22) de la boîte d'étanchéité (20) et pris en sandwich entre la boîte extérieure (10) et la boîte d'étanchéité (20),
dans laquelle le joint d'étanchéité (30) comporte:
une partie de recouvrement (31) moulée sur la paroi périphérique (22) de manière à recouvrir au moins une partie de la paroi périphérique (22) de la boîte d'étanchéité (20), la partie de recouvrement (31) recouvrant également un côté intérieur de la boîte d'étanchéité (20); et
une partie en saillie (32) formée de manière solidaire avec la partie de recouvrement (31) et déplacée par rapport à la paroi périphérique (22) dans la direction axiale de cylindre,
dans laquelle:
une portion de la partie de recouvrement (31) qui est située adjacente à la boîte extérieure (10) est prise en sandwich entre la paroi latérale cylindrique (12) de la boîte extérieure (10) et la paroi périphérique (22) de la boîte d'étanchéité (20),
une partie d'injection (33) est située sur une portion de la partie en saillie (32) qui fait face à la paroi latérale cylindrique (12) de la boîte extérieure (10), et
la partie d'injection (33) présente un évidement (33a) formé sur une surface de la partie en saillie (32).

2. Batterie plate selon la revendication 1, dans laquelle la partie en saillie (32) présente une longueur mesurée dans la direction axiale de cylindre qui est supérieure à une grandeur de la partie en saillie (32) mesurée dans un sens de l'épaisseur.

3. Batterie plate selon la revendication 2, dans laquelle la paroi périphérique (22) de la boîte d'étanchéité (20) s'étend dans la direction axiale de cylindre, sa partie de bord n'étant pas repliée.

4. Batterie plate selon la revendication 2 ou 3, dans laquelle la partie en saillie (32) présente une longueur de saillie mesurée dans la direction axiale de cylindre qui est supérieure à une épaisseur de la partie en saillie (32) mesurée à son bord.

5. Batterie plate selon l'une quelconque des revendications 2 à 4, dans laquelle la partie en saillie (32) présente une longueur de saillie mesurée dans la direction axiale de cylindre qui est de 1/4 ou plus d'une longueur du joint d'étanchéité (30) mesurée dans la direction axiale de cylindre.

6. Batterie plate selon l'une quelconque des revendications 2 à 5, dans laquelle le joint d'étanchéité (30) est de forme conique de sorte qu'une épaisseur d'une portion de la partie de recouvrement (31) qui recouvre un côté extérieur de la paroi périphérique (22) de la boîte d'étanchéité (20) diminue graduellement vers un bord de la paroi périphérique (22).

7. Batterie plate selon l'une quelconque des revendications 2 à 6, dans laquelle:
la boîte extérieure (10) et la boîte d'étanchéité (20) présentent un fond et sont de forme cylindrique, et
la paroi latérale cylindrique (12) de la boîte extérieure (10) présente un diamètre extérieur (D) qui est inférieur à quatre fois une hauteur de la boîte extérieure (10) et de la boîte d'étanchéité (20) assemblées mesurée dans la direction axiale de cylindre.

8. Batterie plate selon la revendication 7, dans laquelle la paroi latérale cylindrique (12) de la boîte extérieure (10) présente un diamètre extérieur qui n'est pas supérieur à deux fois la hauteur de la boîte extérieure (10) et de la boîte d'étanchéité (20) assemblées mesurée dans la direction axiale de cylindre.

9. Procédé de fabrication d'une batterie plate, comprenant:
une étape de formation de boîte d'étanchéité (20) pour former une boîte d'étanchéité cylindrique à fond (20); et
une étape de moulage de joint d'étanchéité (30) pour mouler par injection un joint d'étanchéité (30) sur une paroi périphérique (22) de la boîte d'étanchéité (20) à l'aide d'un moule, le joint d'étanchéité (30) présentant une partie de recouvrement (31) recouvrant la paroi périphérique (22) de la boîte d'étanchéité (20) et une partie en saillie (32) faisant saillie par rapport à la partie de recouvrement (31),
dans lequel, à l'étape de moulage de joint d'étanchéité (30), le joint d'étanchéité (30) est moulé en injectant de la résine dans une zone du moule (61 à 63) qui est utilisée pour former la partie en saillie (32) pendant le moulage par injection, la partie de recouvrement (31) recouvrant également un côté intérieur et un côté extérieur de la boîte d'étanchéité (20),
de sorte que la batterie plane soit telle que:
une portion de la partie de recouvrement (31) qui est située adjacente à la boîte extérieure (10) soit prise en sandwich entre la paroi latérale cylindrique (12) de la boîte extérieure (10) et la paroi périphérique (22) de la boîte d'étanchéité (20),
une partie d'injection (33) soit située sur une portion de la partie en saillie (32) qui fait face à la paroi latérale cylindrique (12) de la boîte extérieure (10), et
la partie d'injection (33) présente un évidement (33a) formé sur une surface de la partie en saillie (32).

10. Procédé selon la revendication 9, **caractérisé par** le fait d'introduire un matériau de résine à travers un orifice d'injection (61a) du moule (61 à 63) qui est déplacé par rapport à la paroi périphérique (22) de la boîte d'étanchéité (20).

11. Procédé selon la revendication 10, **caractérisé par** le fait de former l'évidement (33a) en éliminant une saillie (30a) sur la partie en saillie (32) formée dans l'orifice d'injection (61a).

12. Procédé selon l'une quelconque des revendications 9 à 11, **caractérisé par** le fait de placer la boîte d'étanchéité (20) sur une boîte extérieure cylindrique à fond (10) de manière à recouvrir son ouverture.
